# EUROPÄISCHE PATENTSCHRIFT

(11) **EP 2 687 403 B1**
(45) Veröffentlichungstag und Bekanntmachung des Hinweises auf die Patenterteilung: **25.09.2019**
(21) Anmeldenummer: 13176445.8
(22) Anmeldetag: 15.07.2013
(51) Int. Cl.: B60P 3/40, B62D 53/02

(54) **Transportsystem für lange Lasten**
Transport system for long loads
Système de transport pour charges longues

(30) Priorität: 19.07.2012 DE 102012106563
(43) Veröffentlichungstag der Anmeldung: 22.01.2014
(73) Patentinhaber: Hubtex Maschinenbau GmbH & Co. KG, 36041 Fulda (DE)
(72) Erfinder: Otterbein, Achim, 36137 Großenlüder (DE)
(74) Vertreter: Kluin, Jörg-Eden

(56) Entgegenhaltungen:
- WO-A1-2011/127526
- WO-A2-2012/070780
- DE-A1- 3 610 254
- FR-A- 1 493 993
- US-A1- 2005 212 243

## Beschreibung

Die Erfindung betrifft ein Transportsystem für lange Lasten, wie beispielsweise Eisenbahnwagons, Triebwagenuntergestelle von beispielsweise bis zu 30 m Länge. Das Transportsystem ist gleichermaßen auch für beliebige andere, langgestreckte Lasten, wie beispielsweise zu einem Bündel zusammengefügte Baumstämme, Brückenpfeiler, Windradflügel usw. geeignet.

Es besteht vielfältig der Bedarf, lange Lasten zu transportieren. Insbesondere in industriell genutzten Bereichen, wie beispielsweise Werksgeländen, Häfen, Verladebahnhöfen usw. müssen häufig langgestreckte Lasten auf engem Raum rangiert werden.

Es sind daher bereits unterschiedliche Varianten von Transportsystemen bekannt.

Aus der DE 36 10 254 A1 ist beispielsweise ein Verbund gleichartiger selbstfahrender Schwerlastfahrzeuge bekannt, bei dem lediglich ein Fahrzeug gesteuert wird und die übrigen Fahrzeuge automatisch nachgeführt werden. Hierzu werden sämtliche Fahrzeuge über eine elektrische Datenleitung miteinander verbunden.

Aus der FR 1 493 993 A ist ein Schwerlastfahrzeug bekannt, bestehend aus einer ersten Zugmaschine, einer zweiten Zugmaschine und einem zwischen den beiden Zugmaschinen angeordneten Transportbehälter. Der Transportbehälter ist auf den Zugmaschinen jeweils über einen Königszapfen schenkbar gelagert, so dass das Gesamtfahrzeug zwar relativ flexibel ausgebildet ist, jedoch bei zusätzlich besonders breiten Lasten - insbesondere in Kurvenfahrten - zu einem seitlichen Kippen neigen kann.

Der Erfindung liegt die Aufgabe zugrunde, ein Transportsystem für lange Lasten zu schaffen, welches dahingehend vielseitig einsetzbar ist, dass es für Lasten unterschiedlichster Art und Länge geeignet ist. Ferner soll eine möglichst schnelles und unkompliziertes Kuppeln der einzelnen Fahrzeuge sowie eine präzise und verschleißarme Bewegung des Gesamtfahrzeugs ermöglicht sein.

Diese Aufgabe wird durch das in Anspruch 1 wiedergegebene Transportsystem gelöst.

Es umfasst mindestens zwei mit der Last wahlweise kuppelbare Einzelfahrzeuge. Diese Einzelfahrzeuge sind im von der Last entkuppelten Zustand unabhängig voneinander verfahrbar und unabhängig voneinander lenkbar. Hierdurch können die Einzelfahrzeuge sehr viel kürzer ausgebildet sein als die lange Last, die mit Hilfe von mindestens zweien oder auch mehreren dieser Einzelfahrzeuge transportiert werden soll. Hierdurch sind die Einzelfahrzeuge sehr wendig und mit geringem Platzbedarf manövrierbar und bei Nichtverwendung parkbar.

Zum Transport einer langen Last sind die Einzelfahrzeuge zum festen Ankuppeln mit dieser Last vorgesehen. Damit die Fahrzeuge während des Transports nicht separat voneinander gelenkt werden müssen, was zwar für geübte Bedienpersonen theoretisch möglich wäre, jedoch in der Praxis kaum vorstellbar ist, sind die Einzelfahrzeuge im mit der Last gekuppelten Zustand derart miteinander koppelbar oder gekoppelt, dass ein Fahr- und Lenkverhalten eines die kuppelbaren Fahrzeuge umfassenden starren Gesamtfahrzeugs bewirkt wird. Die miteinander gekoppelten Einzelfahrzeuge lassen sich beispielsweise mit nur einem einzigen Lenkorgan eines Gesamtfahrzeuglenkgebers, der Teil einer Gesamtfahrzeugsteuereinrichtung ist, beispielsweise einem Lenkrad bestückten Lenkgeber, lenken wie ein von vornherein starres Einzelfahrzeug, bei welchem sämtliche Radanordnungen feststehend zu jeweils den anderen Radanordnungen des Fahrzeugs angeordnet sind. Im gekoppelten Zustand werden kontinuierlich die Entfernung und die Lage der Einzelfahrzeuge relativ zueinander ausgetauscht, um so die für den gewünschten Fahrzustand erforderlichen Lenkwinkel und/oder Antriebsleistungen optimal vorgeben zu können.

Jedes der Einzelfahrzeuge umfasst eine eigene Antriebseinrichtung und eine eigene Lenkeinrichtung. Aufgrund dieser Maßnahme sind die Einzelfahrzeuge vollständig autark verfahrbar, d. h. es muss nicht beispielsweise zum Verfahren im von der Last entkuppelten Zustand eine separate Antriebseinrichtung angekuppelt werden.

Erfindungsgemäß sind bei dem Transportsystem eine Abstandserfassungseinrichtung und eine Gesamtfahrzeugsteuereinrichtung (Zentralelektronik) vorgesehen. Mit der Abstandserfassungseinrichtung wird der Abstand der an die Last angekuppelten Einzelfahrzeuge relativ zueinander bestimmt. Die genaue Kenntnis dieses Abstandes und damit der Lagen der Fahrzeuge zueinander ist von besonderer Bedeutung, da er den Lenkwinkel beeinflusst, um welchen jede Lenkeinrichtung zur Erzielung eines bestimmten Fahrzustandes betätigt werden muss. Insbesondere hängt der Lenkwinkel vom Abstand der Fahrzeuge zueinander dann ab, wenn bei Kurven- oder Karussellfahrt ein Radieren eines oder mehrerer Räder verhindert werden soll, was voraussetzt, dass sich die Radachsen alle in einem einzigen Pol, dem Lenkpol schneiden. Die Gesamtfahrzeugsteuereinrichtung wird dann mit dem gemessenen Entfernungswert beaufschlagt. Auch die Gesamtfahrzeugsteuereinrichtung kann unterschiedliche Lenkprogramme aufweisen. In Abhängigkeit des jeweils gewählten Lenkprogramms werden dann unter Berücksichtigung der mittels beispielsweise Lenkrad bestückten Gesamtfahrzeuglenkgebers der Gesamtsteuerungseinrichtung vorgegebenen Lenkbefehle und unter Berücksichtigung des übermittelten Abstandes die einzelnen Räder im Sinne eines für den gewünschten Fahrzustand optimalen Lenkwinkels betätigt. Je nach Lenkprogramm verlaufen die Radachsen sämtlicher Räder aller Einzelfahrzeuge etwa in einem gemeinsamen Lenkpol (beispielsweise bei Kurven- oder bei Karussellfahrt).

Oder die Radachsen sämtlicher Räder aller Einzelfahrzeuge verlaufen etwa parallel zueinander, beispielsweise bei Vorwärts-, Quer- oder Schrägfahrt.

Um eine bestmögliche Rangierbarkeit sowohl der von der Last entkuppelten Einzelfahrzeuge, als auch des durch kuppeln mit der Last erzeugten Gesamtfahrzeugs zu erzielen, umfasst jedes Fahrzeug eine Allradlenkeinrichtung mit verschiedenen Lenkprogrammen. Als Lenkprogramme seien beispielhaft Geradeausfahrt, einachsgelenkte Fahrt, zweiachsgelenkte Fahrt, Querfahrt, Diagonalfahrt oder Karussellfahrt genannt.

Jedes Einzelfahrzeug umfasst mindestens drei Räder. Es können jedoch - wenn dies beispielsweise wegen einer großen Masse der langen Last erforderlich ist - auch mehr Räder pro Einzelfahrzeug vorgesehen sein.

Bei einer weiteren bevorzugten Ausführungsform des erfindungsgemäßen Transportsystems sind auch die Antriebseinrichtungen der Einzelfahrzeuge mit der Gesamtfahrzeugsteuereinrichtung wirkverbunden, und zwar derart, dass die Antriebseinrichtungen im mit der Last gekuppelten Zustand unter Berücksichtigung des Abstandes, des Lenkprogramms und des mittels des Gesamtlenkgebers vorgegebenen Lenksollwerts derart ansteuerbar sind, dass die Drehzahl der angetriebenen Räder an dem jeweiligen Fahrzustand im Sinne des Vermeidens von Schlupf zwischen Radoberfläche und Untergrund anpassbar ist. Beispielsweise würden bei einer Karussellfahrt um einen Drehpunkt diejenigen angetriebenen Räder, die einen größeren Abstand zum Drehpunkt aufweisen, mit einer höheren Antriebsleistung beaufschlagt als diejenige, die dem Drehpunkt näher liegen.

Die Abstandserfassungseinrichtung kann auf beliebige Art, die eine ausreichend präzise Abstandsbestimmung zwischen den Fahrzeugen ermöglicht, konstruktiv ausgestaltet sein. Unter "ausreichend präzise" ist eine Abstandsbestimmung zu verstehen, die vorzugsweise einen Abstandsfehler kleiner einem Prozent, besonders bevorzugt kleiner einem Promille des tatsächlichen Abstandes zwischen den Einzelfahrzeugen sicherstellt.

Die Abstandserfassungseinrichtung kann konstruktiv durch einen Seilzuglängengeber ausgebildet sein. Beispielhaft seien als weitere, konstruktive Varianten Laser basierte oder Radar basierte Abstandserfassungssysteme genannt. Vorzugsweise ist die Abstandserfassungseinrichtung derart ausgebildet, dass sie den Abstand der Einzelfahrzeuge zueinander an mehreren Stellen erfasst. Auf diese Weise können beispielsweise auch Schrägstellungen der Einzelfahrzeuge zueinander im an die Last gekuppelten Zustand ermittelt und bei der Lenkwinkelvorgabe der gelenkten Räder der Einzelfahrzeuge berücksichtigt werden.

Die Erfindung soll nachfolgend anhand der beigefügten Zeichnungen, die ein Ausführungsbeispiel eines erfindungsgemäßen Transportsystems rein schematisch in einer Ansicht von oben, d. h. senkrecht auf den Untergrund darstellen, weiter erläutert werden. Es zeigen:
- Fig. 1: zwei Einzelfahrzeuge im von einer Last entkuppelten Zustand;
- Fig. 2: die beiden Fahrzeuge in einem mit der Last gekuppelten Zustand bei einer Querfahrt;
- Fig. 3: die Einzelfahrzeuge im mit der Last gekuppelten Zustand bei einer Karussellfahrt sowie
- Fig. 4: die beiden Einzelfahrzeuge im mit der Last gekuppelten Zustand bei einer Kurvenfahrt.

Das in der Zeichnung dargestellte Ausführungsbeispiel 100 des erfindungsgemäßen Transportsystems umfasst zwei Einzelfahrzeuge 1, 2. Es ist jedoch ebenfalls möglich, wenn dies aufgrund der Länge und/oder der Masse der zu transportierenden Last vorteilhaft erscheint, noch ein oder mehrere weitere Einzelfahrzeuge vorzusehen.

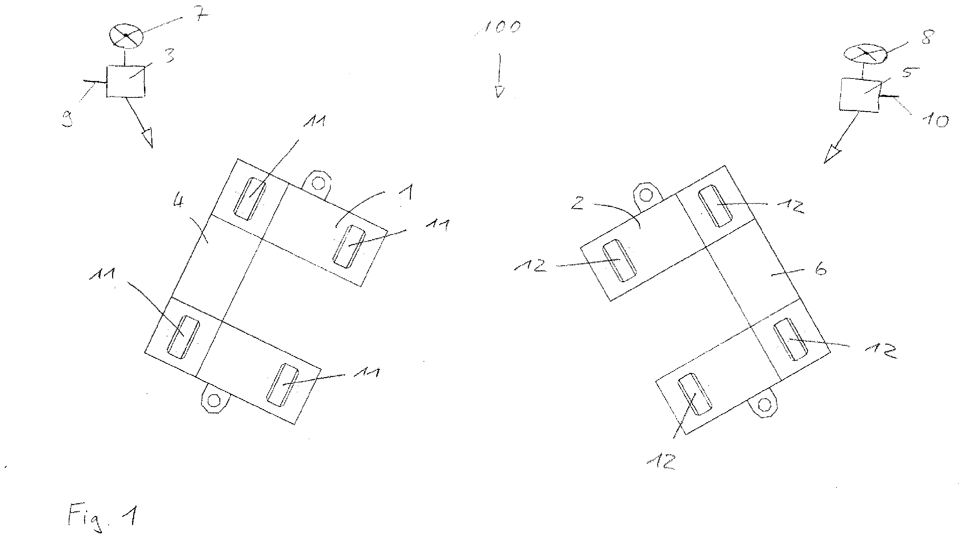

Bei dem in Fig. 1 dargestellten, von einer Last entkuppelten Zustand können die Einzelfahrzeuge mit ihren jeweils zugeordneten Lenk- und Antriebseinrichtungen 3, 4; 5, 6 verfahren werden. Die Lenkeinrichtungen 3, 5 können - wie beispielsweise in Fig. 1 angedeutet - als von dem jeweiligen Einzelfahrzeug 1, 2 separate Funkfernsteuereinrichtungen ausgebildet sein. Sie können einen beispielsweise mit einem Lenkrad 7, 8 gekoppelten Lenksollwertgeber sowie einen beispielsweise mit einem Betätigungshebel 9, 10 gekoppelten Antriebsleistungsgeber umfassen. Über das jeweilige Lenkrad 7, 8 können die lenkbaren Räder 11, 12 - hier sämtliche Räder des jeweiligen Einzelfahrzeugs 1, 2 - jeweils um eine senkrecht zur Zeichenebene verlaufende Lenkachse gelenkt werden. Mit dem jeweiligen Betätigungshebel 9, 10 kann die Antriebsleistung, mit dem die angetriebenen Räder 11, 12, hier sämtliche Räder und somit die Fahrgeschwindigkeit des jeweiligen Einzelfahrzeugs 1, 2, beeinflusst werden.

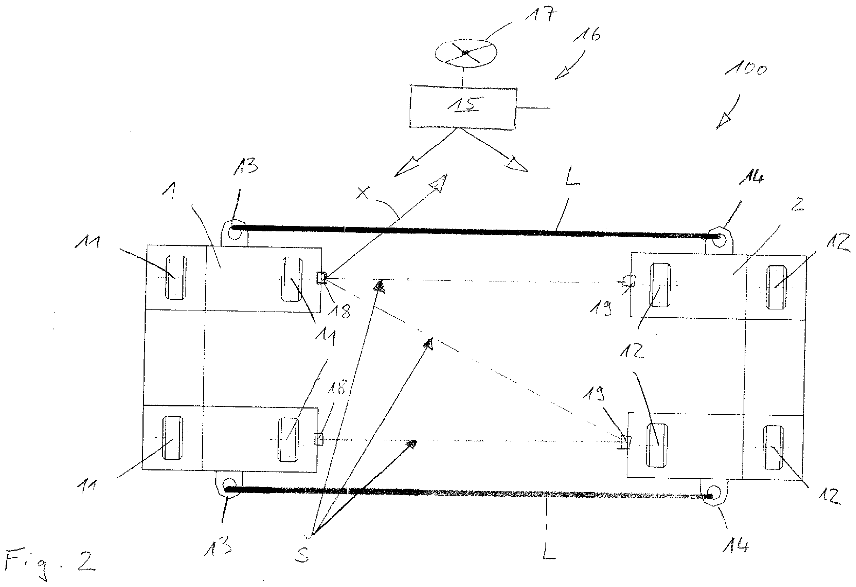

Mit Hilfe der Steuereinrichtungen 3, 5 können die Einzelfahrzeuge 1, 2 aus ihrem beispielhaft in Fig. 1 dargestellten, von einer Last entkuppelten Zustand so in Ausrichtung gebracht werden, dass sie mit einer Last gekuppelt werden können. Dies kann beispielsweise dadurch geschehen, dass die beiden Einzelfahrzeuge 1, 2 mit Hilfe der Steuereinrichtungen 3, 5 in einer Ausrichtung zueinander gebracht werden, in denen Kuppelelemente 13, 14 - hier in Form von an den Einzelfahrzeugen 1, 2 angebrachten Augen - sich in Positionen befinden, in denen Gegenkuppelelemente einer Last - hier beispielsweise in der Zeichnung nicht erkennbare Bolzen - durch Absenken der Last in die Augen eingefahren werden. Die Last ist in den Fig. 2 bis 4 mit L bezeichnet und lediglich durch zwei parallele, jeweils ein Paar Kuppelelemente 13, 14 miteinander verbindende Balken dargestellt.

Die beiden Einzelfahrzeuge 1, 2 gehören zusammen mit einem Gesamtfahrzeuglenkgeber 15 zu dem erfindungsgemäßen Transportsystem. Bei dem in der Zeichnung dargestellten Ausführungsbeispiel ist der Gesamtfahrzeuglenkgeber 15 wiederum Teil einer Gesamtfahrzeugsteuereinrichtung 16 (Zentralelektronik), welche als Funkfernsteuerung ausgebildet ist und bei welcher der Gesamtfahrzeuglenkgeber 15 mit einem Lenkrad 17 gekoppelt ist. Die Gesamtfahrzeugsteuereinrichtung 16 ist nun vorgesehen, um beide Einzelfahrzeuge 1, 2 synchron und unter Berücksichtigung des jeweiligen Lenkprogramms aufeinander abgestimmt zu steuern, d. h. die lenkbaren Räder zu lenken und die Antriebsleistung der angetriebenen Räder zu beeinflussen.

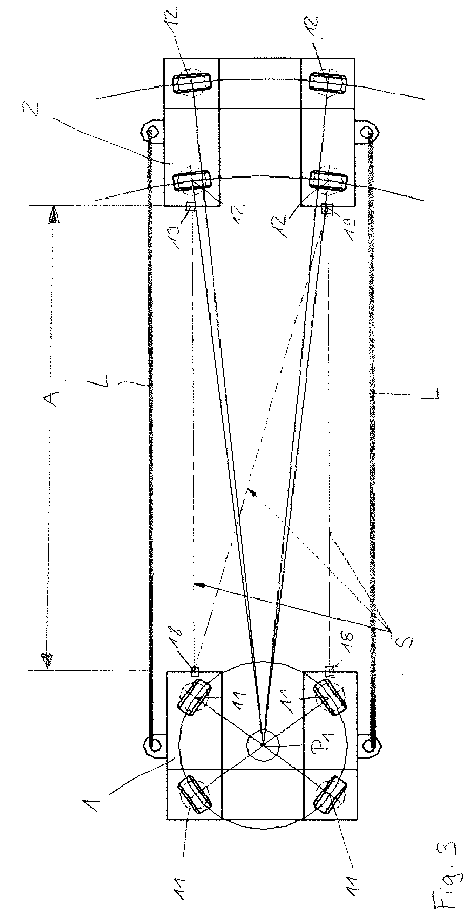

Bei dem in Fig. 2 dargestellten Betriebszustand sind sämtliche Räder 11, 12 der beiden Einzelfahrzeuge 1, 2 parallel zueinander ausgerichtet. Das Transportsystem befindet sich in Querfahrtausrichtung, in welcher es senkrecht zur Längserstreckung der Last L verfahren würde. Wird nun in ein anderes Lenkprogramm umgeschaltet, wozu die Gesamtfahrzeugsteuereinrichtung 16 ausgebildet ist, beispielsweise in eine in Fig. 3 dargestellte Karussellfahrt, so müssen sämtliche Räder 11, 12 derart gelenkt werden, dass sich ihre Achsen in einem gemeinsamen Lenkpol P1 schneiden. Wie unmittelbar aus Fig. 3 sinnfällig wird, hängen die Lenkwinkel, um die die Räder 12 des Einzelfahrzeugs 2 individuell betätigt werden von dem Abstand A zwischen den beiden Einzelfahrzeugen 1, 2 ab und müssen angepasst werden, sollen ein Radieren der Räder auf dem Untergrund und eine unkontrollierbare Einleitung von Kräften in die Last L vermieden werden. Es ist also erforderlich, die Lenkwinkel in Abhängigkeit des Abstandes A zwischen den Einzelfahrzeugen zu beeinflussen.

Hierzu umfassen die beiden Einzelfahrzeuge Abstandserfassungseinrichtungen 18, 19, die den Abstand zwischen den beiden Fahrzeugen entlang der Strecken S erfassen und - wie anhand des Pfeils X in Fig. 2 symbolisiert werden soll - der Gesamtfahrzeugsteuereinrichtung 16 übermitteln. Die Gesamtfahrzeugsteuereinrichtung 16 umfasst eine Rechenroutine, welche in Abhängigkeit des gewählten Lenkprogramms, des Lenkgebersollwerts und des Abstandes die Lenkwinkel der gelenkten Räder 11, 12 vorgibt.

Bei der in Fig. 3 dargestellten Karussellfahrt befindet sich der Drehpunkt im Zentrum des links dargestellten Einzelfahrzeugs 1. Lediglich der Lenkwinkel der Räder 12 des rechts dargestellten Einzelfahrzeugs 2 ist bei dieser Karussellfahrt abhängig von dem Abstand A.

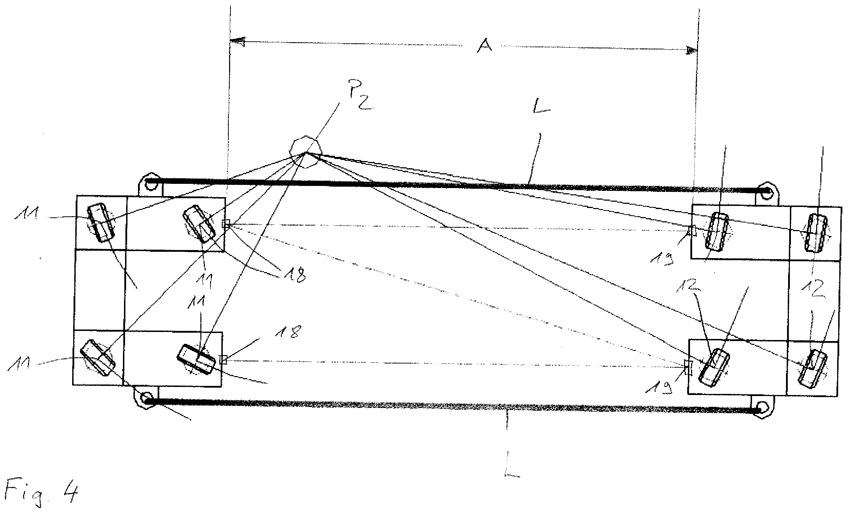

Anders ist dies bei dem in Fig. 4 dargestellten Fahrzustand, bei welchem die Last L in einer Kurve gemäß eines anderen Lenkprogramms verfahren wird. Bei dem in Fig. 4 dargestellten Fahrzustand befindet sich der Lenkpol P2 außerhalb der Konturen der Last L und auch außerhalb der Einzelfahrzeuge 1, 2. Wiederum wird unmittelbar sinnfällig, dass die Lenkwinkel, in welchen sich die Räder 11, 12 befinden müssen, von dem Abstand A zwischen den beiden Fahrzeugen abhängig ist und der Abstand A somit zur Lenkung der Räder 11, 12 bekannt sein muss.

### Bezugszeichenliste:

- 100: Transportsystem
- 1: Einzelfahrzeug
- 2: Einzelfahrzeug
- 3: Steuereinrichtung
- 4: Antriebseinrichtung
- 5: Steuereinrichtung
- 6: Antriebseinrichtung
- 7: Lenkrad
- 8: Lenkrad
- 9: Betätigungshebel
- 10: Betätigungshebel
- 11: Räder
- 12: Räder
- 13: Kuppelelemente
- 14: Kuppelelemente
- 15: Gesamtfahrzeuglenkgeber
- 16: Gesamtfahrzeugsteuereinrichtung
- 17: Lenkrad
- 18: Abstandserfassungseinrichtungen
- 19: Abstandserfassungseinrichtungen
- A: Abstand
- L: Last
- P1: Lenkpol
- P2: Lenkpol
- S: Strecken
- X: Pfeil

## Patentansprüche

1. Transportsystem (100) für lange Lasten (L), insbesondere für ISO-Container, mit mindestens zwei mit der Last (L) wahlweise kuppelbaren Einzelfahrzeugen (1, 2),
wobei jedes Einzelfahrzeug (1, 2) eine eigene Antriebseinrichtung (4, 6) und eine eigene Lenkeinrichtung, die vorzugsweise ein Lenkrad (7, 8) umfasst, aufweist und im von der Last (L) entkuppelten Zustand unabhängig voneinander verfahrbar und unabhängig voneinander lenkbar sind,
und die im mit der Last (L) gekuppelten Zustand derart miteinander koppelbar oder gekoppelt sind, dass ein Fahr- und Lenkverhalten eines die kuppelbaren Einzelfahrzeuge (1, 2) umfassenden starren Gesamtfahrzeugs bewirkt wird, **dadurch gekennzeichnet, dass**
eine Abstandserfassungseinrichtung (18, 19) und eine Gesamtfahrzeugsteuereinrichtung (16) vorgesehen sind,
wobei die Abstandserfassungseinrichtung (18, 19) zur Ermittlung des Abstandes (A) zwischen den Einzelfahrzeugen (1, 2) im mit der Last (L) gekuppelten Zustand, und die Gesamtfahrzeugsteuereinrichtung (16) zur Betätigung der Lenkeinrichtungen der Einzelfahrzeuge (1, 2) unter Berücksichtigung des Abstandes (A) und des jeweiligen Lenkprogramms in Abhängigkeit eines durch einen Gesamtfahrzeuglenkgeber vorgegebenen Lenksollwerts vorgesehen sind, derart, dass sich die Radachsen sämtlicher Räder (11, 12) aller Einzelfahrzeuge (1, 2) etwa in einem gemeinsamen Lenkpol (P1, P2) schneiden, oder zumindest nahezu parallel verlaufen.

2. Transportsystem nach Anspruch 1, **dadurch gekennzeichnet, dass** die Lenkeinrichtung eine Allradlenkeinrichtung mit verschiedenen Lenkprogrammen umfasst.

3. Transportsystem nach einem der Ansprüche 1 oder 2, **dadurch gekennzeichnet, dass** jedes Einzelfahrzeug (1, 2) mindestens drei Räder umfasst.

4. Transportsystem nach einem der voranstehenden Ansprüche, **dadurch gekennzeichnet, dass** die Antriebseinrichtungen der Einzelfahrzeuge (1, 2) mit der Gesamtfahrzeugsteuereinrichtung wirkverbunden sind, derart, dass die Antriebseinrichtungen im mit der Last gekuppelten Zustand unter Berücksichtigung des Abstandes, des Lenkprogramms und des mittels des Gesamtlenkgebers vorgegebenen Lenksollwerts derart ansteuerbar sind, dass die Drehzahl der angetrieben Räder (11, 12) an dem jeweiligen Fahrzustand im Sinne des Vermeidens von Schlupf anpassbar ist.

5. Transportsystem nach einem der voranstehenden Ansprüche, **dadurch gekennzeichnet, dass** die Abstandserfassungseinrichtung (18, 19) einen Seilzuglängengeber umfasst.

6. Transportsystem nach einem der voranstehenden Ansprüche, **dadurch gekennzeichnet, dass** die Abstandserfassungseinrichtung (18, 19) ein Laser basiertes Abstandserfassungssystem umfasst.

7. Transportsystem nach einem der voranstehenden Ansprüche, **dadurch gekennzeichnet, dass** die Abstandserfassungseinrichtung (18, 19) ein Radar basiertes Abstandserfassungssystem umfasst.

8. Transportsystem nach einem der voranstehenden Ansprüche, **dadurch gekennzeichnet, dass** die Abstandserfassungseinrichtung (18, 19) derart ausgebildet ist, dass sie den Abstand der Einzelfahrzeuge (1, 2) zueinander an mehreren Stellen erfasst.

## Claims

1. Transport system (100) for long loads (L), in particular for ISO containers, comprising at least two individual vehicles (1, 2) which can be optionally coupled to the load (L), each individual vehicle (1, 2) having its own drive device (4, 6) and its own steering device, which preferably comprises a steering wheel (7, 8), and being movable and steerable independently of one another when decoupled from the load (L), and said vehicles being coupled to one another or couplable to one another when coupled to the load (L), such that a driving and steering behavior of a rigid complete vehicle comprising the couplable individual vehicles (1, 2) is achieved, **characterized in that** a distance detection device (18, 19) and a complete-vehicle control device (16) are provided, the distance detection device (18, 19) being provided for determining the distance (A) between the individual vehicles (1, 2) when they are coupled to the load (L), and the complete-vehicle control device (16) being provided for actuating the steering devices of the individual vehicles (1, 2), taking into account the distance (A) and the relevant steering program depending on a reference steering value predetermined by a complete-vehicle steering system, the devices being provided such that the wheel axles of all the wheels (11, 12) of all the individual vehicles (1, 2) intersect approximately in a common steering pole (P1, P2), or at least extend almost in parallel.

2. Transport system according to claim 1, **characterized in that** the steering device comprises an all-wheel steering device which has different steering programs.

3. Transport system according to either claim 1 or claim 2, **characterized in that** each individual vehicle (1, 2) comprises at least three wheels.

4. Transport system according to any of the preceding claims, **characterized in that** the drive devices of the individual vehicles (1, 2) are operatively connected to the complete-vehicle control device, such that the drive devices, taking into account the distance, the steering program and the reference steering value predetermined by means of the complete steering system, can be controlled when they are coupled to the load, such that the speed of the driven wheels (11, 12) can be adapted to the relevant driving state for the purpose of preventing slippage.

5. Transport system according to any of the preceding claims, **characterized in that** the distance detection device (18, 19) comprises a string potentiometer.

6. Transport system according to any of the preceding claims, **characterized in that** the distance detection device (18, 19) comprises a laser-based distance detection system.

7. Transport system according to any of the preceding claims, **characterized in that** the distance detection device (18, 19) comprises a radar-based distance detection system.

8. Transport system according to any of the preceding claims, **characterized, in that** the distance detection device (18, 19) is designed such that it detects the distance of the individual vehicles (1, 2) from one another at a plurality of points.

## Revendications

1. Système de transport (100) pour charges longues (L), notamment pour conteneurs ISO, comprenant au moins deux véhicules individuels (1, 2) pouvant être accouplés à la charge (L) de manière sélective,
chaque véhicule individuel (1, 2) présentant son propre dispositif d'entraînement (4, 6) et son propre dispositif de direction qui comprend de préférence un volant (7, 8), lesdits dispositifs pouvant se déplacer indépendamment l'un de l'autre et étant dirigeables indépendamment l'un de l'autre à l'état désaccouplé de la charge (L), et, à l'état couplé à la charge (L), pouvant être couplés ou étant couplés l'un à l'autre de sorte qu'un comportement de conduite et de direction d'un véhicule complet solidaire comprenant les véhicules individuels (1, 2) pouvant être accouplés soit obtenu,
**caractérisé en ce qu'un** dispositif de mesure de distance (18, 19) et un dispositif de commande de véhicule complet (16) sont prévus,
le dispositif de mesure de distance (18, 19) étant prévu pour déterminer la distance (A) entre les véhicules individuels (1, 2) à l'état accouplé à la charge (L), et le dispositif de commande de véhicule complet (16) étant prévu pour actionner les dispositifs de direction des véhicules individuels (1, 2) en tenant compte de la distance (A) et du programme de direction correspondant en fonction d'une valeur de consigne de direction prédéterminée par un mécanisme de direction de véhicule complet, de sorte que les essieux de toutes les roues (11, 12) de tous les véhicules individuels (1, 2) se coupent approximativement dans un pôle de direction commun (P1, P2) ou sont au moins pratiquement parallèles.

2. Système de transport selon la revendication 1, **caractérisé en ce que** le dispositif de direction comprend un dispositif de direction de toutes les roues comprenant différents programmes de direction.

3. Système de transport selon l'une des revendications 1 ou 2, **caractérisé en ce que** chaque véhicule individuel (1, 2) comprend au moins trois roues.

4. Système de transport selon l'une des revendications précédentes, **caractérisé en ce que** les dispositifs d'entraînement des véhicules individuels (1, 2) sont reliés fonctionnellement au dispositif de commande de véhicule complet, de sorte que les dispositifs d'entraînement peuvent être actionnés à l'état accouplé à la charge, en tenant compte de la distance, du programme de direction et de la valeur de consigne de direction prédéterminée au moyen du mécanisme de direction complet, de sorte que la vitesse de rotation des roues (11, 12) puisse être réglée, à l'état de conduite correspondant, en vue d'éviter un glissement.

5. Système de transport selon l'une des revendications précédentes, **caractérisé en ce que** le dispositif de mesure de distance (18, 19) comprend un potentiomètre à fil.

6. Système de transport selon l'une des revendications précédentes, **caractérisé en ce que** le dispositif de mesure de distance (18, 19) comprend un système de mesure de distance basé sur un laser.

7. Système de transport selon l'une des revendications précédentes, **caractérisé en ce que** le dispositif de mesure de distance (18, 19) comprend un système de mesure de distance basé sur un radar.

8. Système de transport selon l'une des revendications précédentes, **caractérisé en ce que** le dispositif de mesure de distance (18, 19) est conçu de sorte qu'il mesure la distance entre les véhicules individuels (1, 2) à plusieurs points.
